# EUROPEAN PATENT SPECIFICATION

(11) **EP 1 379 962 B1**
(45) Date of publication and mention of the grant of the patent: **02.03.2016**
(21) Application number: 02715045.7
(22) Date of filing: 02.03.2002
(51) Int. Cl.: G06F 15/16, H04L 29/08, H04L 29/06

(54) **SCALABLE SERVER ARCHITECTURE SYSTEMS AND METHODS**
SKALIERBARE SERVERARCHITEKTURSYSTEME UND VERFAHREN
SYSTEMES D'ARCHITECTURE SCALAIRE POUR DES SERVEURS ET PROCEDES ASSOCIES

(30) Priority: 02.03.2001 US 272907 P
(43) Date of publication of application: 14.01.2004
(73) Proprietor: Bytemobile, Inc., 851 West Cypress Creek Road Fort Lauderdale, Florida 33309 (US)
(72) Inventor: PARKER, Dennis, Leander, TX 78641 (US)
(74) Representative: Finnegan Europe LLP
(86) International application number: PCT/US2002/006702
(87) International publication number: WO 2002/071245

(56) References cited:
- WO-A-00/54151
- WO-A-99/56431
- US-A- 5 572 528
- US-A- 6 144 651
- MEI H ET AL: "Turning an HTTP Proxy Server into a Wireless Internet Gateway" INTERNET CITATION, [Online] XP002991576 Retrieved from the Internet: URL:http://www.isoc.org/inet2000/cdproceed ings/3b/3b_1.htm> [retrieved on 2000-01-01]

## Description

### Background of the Invention

The present invention generally relates to wireless communications systems and methods and, more particularly, relates to scalable server architecture systems and methods for wireless packetized data communications networks using specialized protocols.

Conventional packetized data communications protocols and network architectures were developed primarily for use in wired networks and conditions. The protocols and networks are not optimized for the peculiarities of wireless communications environments. Networks, particularly client-server networks such as the Internet, are commonly designed to conform to standardized protocols, for example, the Transport Control Protocol/Internet Protocol (TCP/IP).

In wireless communications, protocols more appropriate for the wireless environment and conditions can provide better performance. The related patent applications describe various protocols and other features that aid wireless communications, such as wireless Internet and e-mail communications. In particular, the related applications describe certain client-server networks for the wireless communications. Adesirable aspect of these networks is that be scalable In order to permit and enable desired communications between wireless client devices and wireless application server provider (ASP) servers. Moreover, these ASP servers must be able to also function with standard communications protocols and characteristics for communications over and with standards-based networks and components, for example, over the internet with other wired and wireless Internet devices that communicate using TCP/IP or other common protocols.

It would be a significant Improvement in the art and technology to provide systems and methods for providing such scalable server architectures capable of communicating wirelessly via specialized wireless protocols, yet maintaining capabilities to integrate those wireless communications for use in communications over standard networks and protocols for communications, for example, over the Internet.

Document WO 99/56431 discloses storage in a database of a cookie related to user profile data of a client device that accesses a server having the database. The reference does not address any scalable server architecture.

WO 00/54151 discloses security in a server system. The server system includes a hierarchy in which application programs available on an upper tier (e.g., more secure) server can be retrieved and run on a lower tier (e.g., less secure) server, if appropriate for the client accessing the lower tier server. The reference does not address any scalable server architecture with several deserialized servers which a client may alternately access, and with upper tier hierarchy management among the deserialized servers.

Document "Turning an HTTP Proxy Server into a Wireless Internet Gateway" of Mei H et al. discloses an HTTP proxy serving as a WAP gateway. WAP is standardized, as Is HTTP. The HTTP server acts as proxy to WAP for wireless devices.

### Summary of the Invention

An embodiment of the invention is a wireless communications network according to claim 1**.**

Another embodiment of the Invention is a method of wireless client-server communications according to claim 2.

### Brief Description of the Drawings

The present invention is illustrated byway of example and not limitation in the accompanying figures, in which like references indicate similar elements, and in which:
FIG. 1 illustrates a client-server network including a wireless client device and an ASP server for wirelessly communication with the wireless client device, according to embodiments of the present;
FIG. 2 illustrates an architecture of the ASP server that allows for scalability of the client-server network of Fig. 1, according to embodiments of the present invention;
FIG. 3 illustrates a method of operation of the ASP server having the architecture of Fig. 2, according to embodiments of the present invention; and
FIG. 4 illustrates an operational diagram of an ASP server having the architecture of Fig. 2 and operating by the method of Fig. 3, according to embodiments of the present invention.

### Detailed Description of Preferred Embodiments

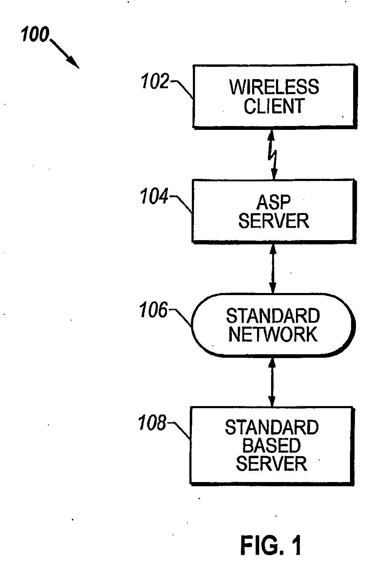

Referring to FIG.1, a communications system 100 includes a wireless communications portion and a wired communications portion. The system 100 includes a network, such as the internet 106. The network is operable according to a particular packetized data protocol, such as transport control protocol/internet protocol (TCP/IP) or some other network protocol. The network, such as the Internet 106, interconnects various computing and communications devices, for example, among other devices, a server computer 108 and a wireless ASP server computer 104. The server computer 108 and the wireless ASP server computer 104 are each one or more server computers including a microprocessor, memory storage, and communications capabilities via wire or wireless connection with the Internet 106. The server computer 108 and the wireless ASP server computer 104 communicate over the internet 106 or other network via the particular protocol of the network, such as the standard Internet network protocol TCP/IP.

The network, such as the internet 106, is also connected with a wireless communications service provider (not shown in detail, although the wireless communications connection is illustrated by the arrow between the ASP server computer 104 and a wireless client device 102 in Fig. 1). The wireless communications service provider is, for example, a cellularor other packetized data wireless communications network. The wireless service provider connects by wire connection with the network, such as the internet 106. Alternatively, the wireless communications service provider could connect with the network 106 by other communications connection, such as fiber optic, coax cable, wireless channel, or other communications connection. Furthermore, the wireless communications service provider can be a single particular communications channel, multiple links and multiple channels of those links, for example, communications links of wired and wireless channels, can alternatively provide the same functions and are included for purposes of the description.

The wireless service provider is capable of communicating through wireless channels with various devices, such as a wireless device 102. The wireless device 102 is a processing device, such as a data-enabled cellular telephone, a personal digital assistant, a laptop computer, or any of a wide variety of other processing devices that can wirelessly communicate with the wireless service provider. Of course, the wireless device 102 includes communications equipment for accomplishing the wireless communication with the wireless service provider, such as wireless modem.

The wireless device 102 communicates through the wireless service provider and over the network, such as the Internet 106, with the wireless ASP server computer 104. The wireless ASP server computer 104 serves as a dedicated server for the wireless device 102 in its communications. The wireless ASP server computer 104 sends and receives communications to and from the wireless device 102 over the network, such as the internet 106, and on through the wireless service provider. The wireless ASP server computer 104 also communicates over the network, such as the internet 106, with other network connected devices, such as the server computer 108, via particular protocols in communications channels enabled for such communications on the network In certain embodiments, for example, the wireless ASP server computer 104 and the wireless device 102 communicate with specialized protocols, such as optimized packetized data protocols, for example, optimized TCP/IP protocols or other protocols such as described in the related patent applications.

Communications between the wireless ASP server computer 104 and the wireless device 102 over the network, including through the wireless service provider and the wireless portion, are performed according to special optimized, nonstandard protocols and formats. Communications between the wireless ASP server computer 104 and other portions and elements of the internet, for example, with the server computer 108, are performed according to different protocols and formats, such as standard networking formats like TCP/IP. For purposes of example here, the network protocol is that of the Internet 106 (i.e., TCP/IP) and certain embodiments of non-standard protocols and formats, for the wireless communications between the wireless ASP server computer 104 and the wireless device 102, are described in the related patent applications. The optimized protocols and formats are not limited to those of the related applications, however, and the same principles and concepts described herein apply to other situations and designs, as well.

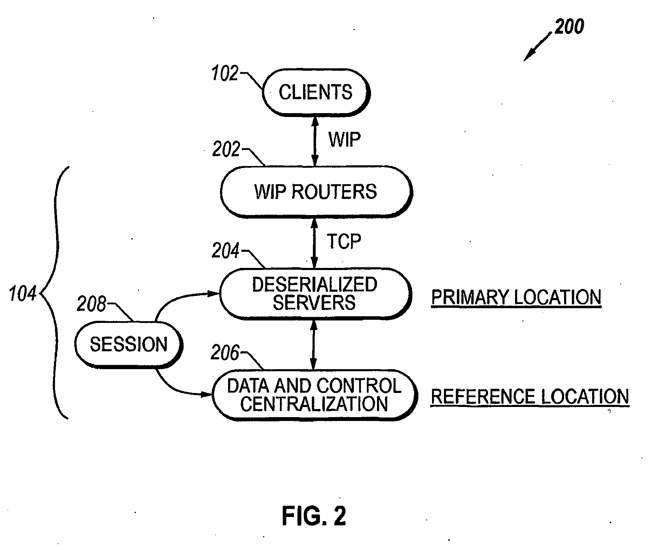

Referring to Fig. 2, as can be expected, in a system 100 of Fig. 1 pluralities of wireless client devices 102 will be concurrently communicating with the wireless ASP server computer 104. In order to enable such concurrent communications, therefore, the wireless ASP server computer 104 must be substantially scalable. As previously mentioned, the wireless ASP server computer 104 is illustrated as a single element for purposes of this description. It is to be understood, however, that the wireless ASP server computer 104 will, in fact, be highly scalable from a single to computer to pluralities of computers sufficient for concurrent communications of pluralities of wireless client devices 102.

The wireless ASP computer 104, whether comprising one or more physical computing devices, has a tiered architecture 200 of Fig. 2. In this tiered architecture 200, a router 202 interfaces directly with the client device 102. The router 202, as is conventional, directs communications received by the router 202 from the client device 102 to appropriate server elements. Two tiers of server elements, comprising a deserialized server 204 and a centralization server 206, perform distinct server functions in the architecture 200. In the architecture 200, the client device 102 communicates wirelessly with the router 202 by particular protocols, such as optimized wireless protocols as described in the related applications. The router 202 communicates with the deserialized server 204 and the centralization server 206 by conventional standard protocols, such as TCP.

The distinct server function performed by the deserialized server 204 is related to relatively dynamic data that must pass between the client device 102 and the server 104. The centralization server 206, on the other hand, serves primarily the functions related to relatively static data. In other words, the "primary location" function of the deserialized server 204 regards real-time instantaneous events and status, whereas the "reference location" function of the centralization server 206 regards continuing events and status that do not often or readily change in most instances during communications with the client device 102. By employing this twotiered server architecture 200, higher tiered architectures are not utilized in the typical communications scenarios, and greater and higher scalability is possible.

An additional session server 208 is also part of the server architecture 200. The session server 208 has specific function of establishing logical sessions, by providing data that is common and shared among the other tiers of the architecture 200. Certain of the data that is so shared is herein referred to as "proxy cookies". As hereinafter described in more detail, each of these proxy cookies correspond to a particular one of the client devices 102. The relevant proxy cookie provides information regarding everything about the particular client device 102 to which the cookie relates. The information represented by the proxy cookie includes, for example, prior session manager information and all present status, condition, and reference information for the relevant wireless client device 102. On ending a communications session with a particular client device 102, all session information of the proxy cookie for the session is saved by the server, for example, by a fourth tier (not shown in detail). Such a saved proxy cookie in a fourth tier provides default fall-back cookie information in the event of a failure during a session. In any event, the proxy cookie concept serves to maintain via the session server 208 complete information regarding each client device 102 then communicating by virtue of the respective proxy cookie for the client device 102. Because each proxy cookie is common data to the deserialization server 204 and the centralization server 206, and a fourth tier (not shown) of the server maintains default information from prior communications session, all server functions can be segregated by relatively dynamic versus relatively static data, according to the server segmentation previously mentioned.

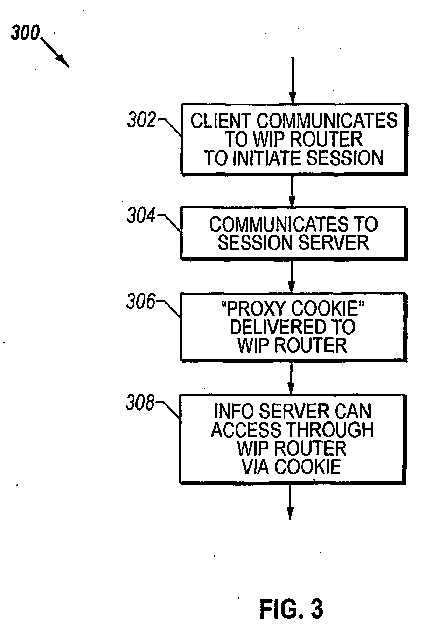

Referring to Fig. 3, a method 300 is performed in operation of the wireless ASP server 104. In the method, the client device 102 communicates in a step 302 to the router 202 to initiate a communications session. In a step 304, the router 202 communicates the Initiation to the session server 208. The session server 208 then generates and delivers In a step 306 a proxy cookie specific to the client device 102 and the session to the router 202. The router 202 can then direct in a step 308 any network elements, such as servers 108 (shown in Fig.1), how and through what location to access the particular client device 102 and interact with the wireless ASP server 104, all via the proxy cookie.

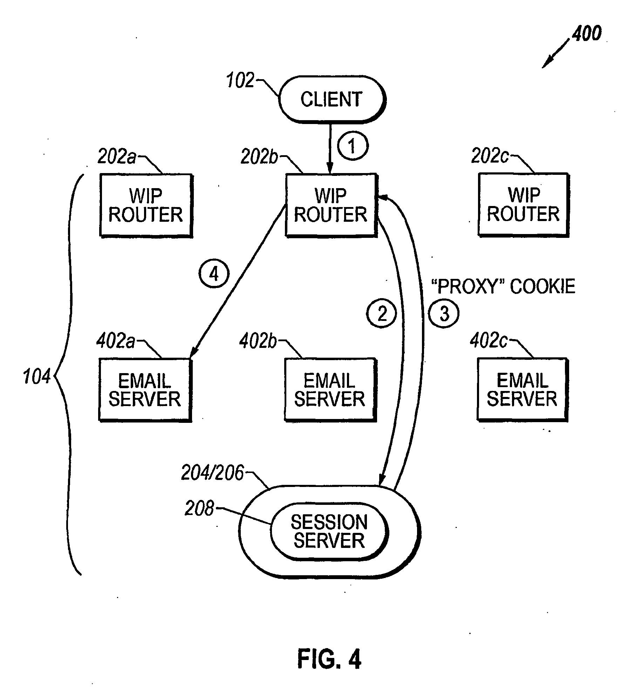

Referring to Fig. 4, exemplary elements of a wireless client-server communications system 400, in accordance with the server architecture 200 and the system 100, includes at least one client device 102. The server 104 in the system 400 includes a plurality of elements, for example, three routers 202a, 202b, 202c, three e-mail servers 402a, 402b, 402c, and the session server 204 as previously described with respect to the architecture 200. The particular elements are intended merely as exemplary, and elements can be increased or decreased to provide scalability and also to provide different or added functions (e.g., ftp server, web server or other server function). The e-mail serverfunction of the illustration is only an example.

In the system 400, the client device 102 initiates a communication session, for example, according to specialized wireless protocols, by connecting one of the routers, such as the router 202b for example purposes. Once the client device 102 so initiates communications, the tiered server 204, 206, together with the session server 208, operate to cause the session server 208 to generate a proxy cookie for the particular session. As previously described, the proxy cookie provides all relevant information regarding the client device 102 for the session and is commonly shared by the tiered server 204,206 in operation.

The proxy cookie is also delivered to and shared with the router 202b involved in the Initiated communication. The proxy cookie dictates for the router 202b the reference locations of the particular e-mail server 402a for purposes of client-server interactions in the communication session. Of course, depending on the particularities of the proxy cookie for the session, the e-mail server so located could have been any other of the e-mail servers 402b, 402c. In effect, the relatively dynamic nature of e-mail data in the system 400 is handled by the system 400 by the proxy cookie that directs the router 202b to provide for communications of the client device 102 with the e-mail server 402a. As can be understood, by using the particular server architecture 200 and the generation and sharing of proxy cookies, scalability of the system 400 is virtually unlimited. Of course, various considerations and limitations will affect the scalability, particularly, the discrimination of appropriate types of relatively dynamic data versus relatively static data. Nonetheless, given suitable discrimination in any application, the system 400 is highly scalable because of the particular architecture 200.

In operation of the foregoing systems and methods, alternative business and technical arrangements are possible. For example, the network could be an intranet, or even an intranet combination or intranet-extranet combination. Numerous banks of the wireless ASP server computer can be possible for receiving communications from pluralities of wireless devices, and the wireless ASP server computers can be centrally located or distributed through a wide geographic area. In the case of a global network such as the internet, the network is capable of generally communicating by its protocols, which may include other specialized protocols for specific situations, notwithstanding that specialized protocols can be employed for client-server communications In particular in the wireless channels.

In the foregoing specification, the invention has been described with reference to specific embodiments. However, one of ordinary skill in the art appreciates that various modifications and changes can be made without departing from the scope of the present invention as set forth in the claims below. Accordingly, the specification and figures are to be regarded in an Illustrative rather than a restrictive sense, and all such modifications are intended to be included within the scope of the present invention.

Benefits, other advantages, and solutions to problems have been described above with regard to specific embodiments. However, the benefits, advantages, solutions to problems and any element(s) that may cause any benefit, advantage, or solution to occur or become more pronounced are not to be construed as a critical, required, or essential feature or element of any or all the claims. As used herein, the terms "comprises, "comprising," or any other variation thereof, are Intended to cover a non-exclusive inclusion, such that a process, method, article, or apparatus that comprises a list of elements does not include only those elements but may include other elements not expressly listed or inherent to such process, method, article, or apparatus.

## Claims

1. A scalable server system in a wireless communications network, comprising:
a session server (208) communicatively connected to the network, responsive to receiving over the network an initiation of a communications session;
a client device (102) for communicating over the network the initiation of the communications session;
a proxy cookie specific to the client device (102), generated by the session server (208) for the communications session in response to receiving the initiation of the communications session;
a centralization server (206) communicatively connected to the session server (208), for communicating relatively static information over the network with the client device (102) based on the proxy cookie shared with the session server (208);
a deserialized server (204) communicatively connected to the session server (208), for communicating relatively dynamic information over the network with the client device (102) based on the proxy cookie shared with the session server (208); and
a router (202) communicatively connected to the session server (208), for receiving the initiation from the client device (102) and communicating the initiation to the session server (208) over the network, for routing communications between the client device (102) and the centralized server (206) over the network, and for routing communications between the client device (102) and the deserialized server (204) over the network, wherein the proxy cookie is communicated by the session server (208) to the router (202).

2. A method of wireless client-server communications, wherein a client device (102) communicates with an application service provider (ASP) server computer over a communications network, the ASP server computer includes a scalable server system, comprising the steps of:
communicating by the client device (102) an initiation of a communication session to a router (202) of the network;
routing the initiation by the router (202) to a session server (208) communicatively connected to the router (202);
generating a proxy cookie corresponding to the client device and the communication session by the session server (208);
delivering the proxy cookie to the router (202);
communicating by the session server (208) the proxy cookie to a centralization server (206) and a deserialized server; and
communicating by the client device (102) over the network via the router (202), relatively static information with the centralization server (206) based on the shared proxy cookie and relatively dynamic information with the deserialized server (204) based on the proxy cookie.

3. The scalable server system of claim 1, further comprising:
more than one deserialized server (204), wherein the client device (102) communicates over the network via the router (202) with at least a respective one of the deserialized server (204) based on the shared proxy cookie for the communications session.

4. The scalable server system of claim 3, further comprising:
more than one client device (102), wherein each respective client device communicates over the network a respective initiation of a respective communications session to the router (202), and a respective proxy cookie is generated by the session server (208) corresponding to each of the respective client device and the respective communications session for the respective client device.

5. The method of claim 2, further comprising the steps of:
receiving, at the deserialized server (204), relatively dynamic information from the client device (102) over the communications session; and receiving, at the centralization server, relatively static information from the client device (102) over the communications session.

6. The method of claim 2, further comprising the steps of:
repeating the steps and updating the respective proxy cookie for respective communication sessions of the client device (102).

7. The method of claim 2, further comprising the steps of:
communicating by more than one client device (102) a respective initiation of a respective communication session to a router (202) of the network;
routing each respective initiation for each client device by the router (202) to a session server connected to the network;
generating by the session server a respective different proxy cookie corresponding to each respective one of the client device (102) and the respective communication session of the respective one of the client device (102);
delivering each of the respective different proxy cookie to the router (202) over the network;
communicating by the router with a centralization server (206) and at least one of more than one deserialized server (204), each of the respective different proxy cookie, wherein the respective proxy cookie for each client device (102), respectively, is communicated by the router to the centralization server (206) and at least one deserialized server, respectively; and
communicating by each of the respective client device (102) over the network via the router (202), relatively static information from the respective client device with the centralization server (206) based on the proxy cookie and relatively dynamic information from the respective client device (102) with the respective at least one deserialized server (204) based on the proxy cookie.

## Patentansprüche

1. Skalierbares Serversystem in einem drahtlosen Kommunikationsnetzwerk, umfassend:
einen Session Server (208), der kommunikativ mit dem Netzwerk verbunden ist und über das Netzwerk auf den Empfang der Initiation einer Kommunikationssitzung reagiert;
ein Client-Gerät (102) zur Kommunikation der Initiation der Kommunikationssitzung über das Netzwerk;
ein für das Client-Gerät (102) spezifisches Proxy-Cookie, das vom Session Server (208) für die Kommunikationssitzung als Reaktion auf den Empfang der Initiation der Kommunikationssitzung generiert ist;
einen Zentralisierungsserver (206), der kommunikativ mit dem Session Server (208) zur Kommunikation von relativ statischer Information über das Netzwerk mit dem Client-Gerät (102) auf Basis des mit dem Session Server (208) geteilten Proxy-Cookies verbunden ist;
einen deserialisierten Server (204), der kommunikativ mit dem Session Server (208) zur Kommunikation von relativ dynamischer Information über das Netzwerk mit dem Client-Gerät (102) auf Basis des mit dem Session Server (208) geteilten Proxy-Cookies verbunden ist; und einen Router (202), der kommunikativ mit dem Session Server (208) verbunden ist, zum Empfang der Initiation vom Client-Gerät (102) und zur Kommunikation der Initiation über das Netzwerk an den Session Server (208), zum Senden der Kommunikation über das Netzwerk zwischen dem Client-Gerät (102) und dem zentralisierten Server (206) und zum Senden der Kommunikation über das Netzwerk zwischen dem Client-Gerät (102) und dem deserialisierten Server (204), wobei das Proxy-Cookie vom Session Server (208) zum Router (202) kommuniziert wird.

2. Verfahren zur drahtlosen Client-Server-Kommunikation, wobei ein Client-Gerät (102) über ein Kommunikationsnetzwerk mit dem Serverrechner eines Application Service Providers (ASP) kommuniziert, wobei der ASP-Serverrechner ein skalierbares Serversystem beinhaltet, das folgende Schritte umfasst:
Kommunizieren einer Initiation einer Kommunikationssitzung über das Client-Gerät (102) an einen Router (202) des Netzwerks;
Senden der Initiation über den Router (202) an einen Session Server (208), der kommunikativ mit dem Router (202) verbunden ist;
Generieren eines dem Client-Gerät und der Kommunikationssitzung entsprechenden Proxy Cookies durch den Session Server (208);
Übergeben des Proxy Cookies an den Router (202);
Kommunizieren des Proxy Cookies über den Session Server (208) an einen zentralisierten Server (206) und einen deserialisierten Server; und
Kommunizieren von relativ statischer Information mithilfe des Client-Geräts (102) über das Netzwerk durch den Router (202) mit dem zentralisierten Server (206) auf der Basis eines gemeinsamen Proxy Cookies und von relativ dynamischer Information mit dem deserialisierten Server (204) auf der Basis des Proxy Cookies.

3. Skalierbares Serversystem nach Anspruch 1, außerdem umfassend:
mehr als einen deserialisierten Server (204), wobei das Client-Gerät (102) über das Netzwerk und
den Router (202) mit mindestens einem entsprechenden deserialisierten Server (204) auf Basis des gemeinsamen Proxy Cookies für die Kommunikationssitzung kommuniziert.

4. Skalierbares Serversystem nach Anspruch 3, außerdem umfassend:
mehr als ein Client-Gerät (102), wobei jedes entsprechende Client-Gerät über das Netzwerk eine entsprechende Initiation einer entsprechenden Kommunikationssitzung an den Router (202) kommuniziert und ein entsprechendes Proxy Cookie vom Session Server (208) generiert wird, das jedem der entsprechenden Client-Geräte und der entsprechenden Kommunikationssitzung für das entsprechende Client-Gerät entspricht.

5. Verfahren nach Anspruch 2, außerdem folgende Schritte umfassend:
Empfangen von relativ dynamischer Information am deserialisierten Server (204) vom Client-Gerät (102) über die Kommunikationssitzung; und Empfangen von relativ statischer Information am zentralisierten Server vom Client-Gerät (102) über die Kommunikationssitzung.

6. Verfahren nach Anspruch 2, außerdem folgende Schritte umfassend:
Wiederholen der Schritte und Aktualisieren des entsprechenden Proxy Cookies für entsprechende Kommunikationssitzungen des Client-Geräts (102).

7. Verfahren nach Anspruch 2, außerdem folgende Schritte umfassend:
Kommunizieren einer entsprechenden Initiation einer entsprechenden Kommunikationssitzung über mehr als ein Client-Gerät (102) an einen Router (202) des Netzwerks;
Senden jeder entsprechenden Initiation für jedes Client-Gerät vom Router (202) an den an das Netzwerk angeschlossenen Session Server;
Generieren eines entsprechend unterschiedlichen Proxy Cookies durch den Session Server, das jedem entsprechenden der Client-Geräte (102) entspricht und der entsprechenden Kommunikationssitzung der entsprechenden der Client-Geräte (102);
Übergeben eines jeden der entsprechenden Proxy Cookies über das Netzwerk an den Router (202);
Kommunizieren eines jeden der entsprechenden unterschiedlichen Proxy Cookies über den Router mit einem zentralisierten Server (206) und mindestens einen von mehr als einem deserialisierten Server (204), wobei das entsprechende Proxy Cookie für jedes Client-Gerät (102) entsprechend über den Router an den Zentralisierungsserver (206) bzw. mindestens einen deserialisierten Server kommuniziert wird; und
Kommunizieren von relativ statischer Information durch jedes der entsprechenden Client-Geräte (102) über das Netzwerk und den Router (202) vom entsprechenden Client-Gerät mit dem Zentralisierungsserver (206) auf der Basis des Proxy Cookies und von relativ dynamischer Information vom entsprechenden Client-Gerät (102) mit dem entsprechenden mindestens einem deserialisierten Server (204) auf der Basis des Proxy Cookies.

## Revendications

1. Système de serveurs évolutif dans un réseau de communication sans fil, comprenant :
un serveur de session (208) connecté de manière communicative au réseau, réagissant à la réception via le réseau d'une initiation de session de communication ;
un dispositif client (102) permettant de communiquer via le réseau l'initiation de la session de communication ;
un fichier caché mandataire spécifique au dispositif client (102) généré par le serveur de session (208) pour la session de communication en réponse à la réception de l'initiation de la session de communication ;
un serveur de centralisation (206) connecté de manière communicative au serveur de session (208), permettant de communiquer des informations relativement statiques via le réseau avec le dispositif client (102) sur la base du fichier caché mandataire partagé avec le serveur de session (208) ;
un serveur désérialisé (204) connecté de manière communicative au serveur de session (208),
permettant de communiquer des informations relativement dynamiques via le réseau avec le dispositif client (102) sur la base du fichier caché mandataire partagé avec le serveur de session (208) ; et
un routeur (202) connecté de manière communicative au serveur de session (208), permettant de recevoir l'initiation provenant du dispositif client (102) et de communiquer l'initiation au serveur de session (208) via le réseau, d'acheminer les communications entre le dispositif client (102) et
le serveur centralisé (206) via le réseau, et d'acheminer les communications entre le dispositif client (102) et le serveur désérialisé (204) via le réseau, ledit fichier caché mandataire étant communiqué par le serveur de session (208) au routeur (202).

2. Procédé de communication client-serveur sans fil, ledit dispositif client (102) communiquant avec un ordinateur serveur de fournisseur de services d' applications (ASP) via un réseau de communication, l'ordinateur serveur ASP comprenant un système de serveurs évolutif, comprenant les étapes consistant à :
communiquer par le dispositif client (102) une initiation de session de communication à un routeur (202) du réseau ;
acheminer l'initiation par le routeur (202) vers un serveur de session (208) connecté de manière communicative au routeur (202) ;
générer un fichier caché mandataire correspondant au dispositif client et à la session de communication par le serveur de session (208) ;
transmettre le fichier caché mandataire au routeur (202) ;
communiquer par le serveur de session (208) le fichier caché mandataire à un serveur de centralisation (206) et à un serveur désérialisé ; et
communiquer par le dispositif client (102) via le réseau par l'intermédiaire du routeur (202), des informations relativement statiques avec le serveur de centralisation (206) sur la base du fichier caché mandataire partagé et des informations relativement dynamiques avec le serveur désérialisé (204) sur la base du fichier caché mandataire.

3. Système de serveurs évolutif selon la revendication 1, comprenant en outre :
plus d'un serveur désérialisé (204), ledit dispositif client (102) communiquant via le réseau par l'intermédiaire du routeur (202) avec au moins un serveur respectif des serveurs désérialisés (204) sur la base du fichier caché mandataire pour la session de communication.

4. Système de serveurs évolutif selon la revendication 3, comprenant en outre :
plus d'un dispositif client (102), chaque dispositif client respectif communiquant via le réseau une initiation respective d'une session de communication respective au routeur (202), et un fichier caché mandataire étant généré par le serveur de session (208) correspondant à chacun des dispositifs clients respectifs et à la session de communication respective pour le dispositif client respectif.

5. Procédé selon la revendication 2, comprenant en outre les étapes consistant à :
recevoir, au niveau du serveur désérialisé (204), des informations relativement dynamiques provenant du dispositif client (102) via la session de communication, et recevoir, au niveau du serveur de centralisation, des informations relativement statiques provenant du dispositif client (102) via la session de communication.

6. Procédé selon la revendication 2, comprenant en outre les étapes consistant à :
répéter les étapes et la mise à jour du fichier caché mandataire respectif pour les sessions de communication respectives du dispositif client (102).

7. Procédé selon la revendication 2, comprenant en outre les étapes consistant à :
communiquer par plus d'un dispositif client (102) une initiation respective d'une session de communication respective à un routeur (202) du réseau ;
acheminer chaque initiation respective pour chaque dispositif client par le routeur (202) à un serveur de session connecté au réseau ;
générer par le serveur de session un fichier caché mandataire respectif différent correspondant à chaque dispositif respectif des dispositifs clients (102) et à la session de communication respective dudit dispositif respectif des dispositifs clients (102) ;
transmettre chacun des différents fichiers cachés mandataires respectifs au routeur (202) via le réseau ;
communiquer par le routeur avec un serveur de centralisation (206) et au moins l'un desdits plus d'un serveur désérialisé (204), chacun des différents fichiers cachés mandataires respectifs, ledit fichier caché mandataire respectif pour chaque dispositif client (102), respectivement, étant communiqué par le routeur au serveur de centralisation (206) et audit au moins un serveur désérialisé, respectivement ; et
communiquer par chacun des dispositifs clients respectifs (102) via le réseau par l'intermédiaire du routeur (202), des informations relativement statiques provenant du dispositif client respectif avec le serveur de centralisation (206) sur la base du fichier caché mandataire et des informations relativement dynamiques provenant du dispositif client respectif (102) avec ledit au moins un serveur sérialisé (204) respectif sur la base du fichier caché mandataire.
